Europäisches Patentamt

European Patent Office

Office européen des brevets

(19)

(11) Publication number: **0 184 881**

**B1**

(12)

# EUROPEAN PATENT SPECIFICATION

(45) Date of publication of patent specification: **14.09.88**

(51) Int. Cl.⁴: **C 09 D 5/34,** C 09 K 3/10

(21) Application number: **85201924.9**

(22) Date of filing: **21.11.85**

(88) **A request for correction pursuant to Rule 88 EPC for the purpose of replacing lines 37-38 of page 2 has been filed on 300186.**

(54) **Sealant compositions and a process for the preparation thereof.**

(30) Priority: **12.12.84 NL 8403778**

(43) Date of publication of application:
**18.06.86 Bulletin 86/25**

(45) Publication of the grant of the patent:
**14.09.88 Bulletin 88/37**

(84) Designated Contracting States:
**AT BE CH DE FR GB IT LI LU NL SE**

(56) References cited:
**GB-A-1 272 260**
**GB-A-1 356 382**
**US-A-3 749 692**

(73) Proprietor: **Flexim International B.V.**
**Celciusstraat 6A**
**NL-1704 RW Heerhugowaard (NL)**

(72) Inventor: **Appelman, Nicolaas G.**
**van Veenweg 69**
**NL-1702 HB Heerhugowaard (NL)**
Inventor: **Appelman, Marcellinus J.J.T.**
**Stationsweg 20**
**NL-1702 AE Heerhugowaard (NL)**

(74) Representative: **Kupecz, Arpad et al**
**Octrooibureau Los en Stigter B.V. Postbox 20052**
**NL-1000 HB Amsterdam (NL)**

EP 0 184 881 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to sealant compositions containing vegetable or animal oil, a mineral oil, a filler and a substance which is able to reduce the specific weight, as ingredients, and to a process for the preparation thereof.

Related sealant compositions and a process for the preparation thereof are known from the Netherlands patent application 6911493.

By using the known sealant compositions to seal roof tiles, in particular ridge tiles, it appeared that said sealant compositions have serious drawbacks.

So it appeared that the above disclosed known sealant compositions after being used for joining roof tiles, for sealing gutters and for fastening roof tiles show an insufficient adhesion resulting in dislodging of the tiles after a certain period of time and in blowing off the tiles by harder wind.

Furthermore the known sealant compositions appeared to show rupture. Another significant disadvantage of the known sealant compositions is that they are subjected to bird glutton.

In addition it appears that after certain period of time oil is leaking from the known sealant compositions.

The invention aims now to provide sealing compositions, wherein the above-mentioned drawbacks are removed efficiently.

Accordingly the sealant compositions according to the invention are characterized in that they contain silicas and a surfactant.

Due to the presence of silicas and a surfactant the sealant compositions of the invention achieve thixotropic properties, which means that under influence of forces, such as pressure, pull power etc. the sealant compositions become plastical and after release of said pressure or force they return to their original form.

It appeared that by using the sealant compositions of the invention for joining ridge tiles even by heavy wind the sealant compositions remain adhered to the tiles and they have the ability to follow the mutual displacement of the tiles due to the above mentioned thixotropic properties.

Furthermore the sealant compositions according to the invention are not subjected to bird glutton. The oils present in the sealant compositions of the invention do not tend to leak away, such as in case of the known sealant compositions.

The sealant compositions of the invention contain preferably 3—20%, by weight of silicas and 0,5—3%, by weight, of surfactant.

The silicas are amorphe microscopic particles having a particle size of a few μ. Suitable silicas are those, which are commercially available under the registered trademark Cab-o-sil (Aerosil).

A suitable surfactant is for instance a polyvalent alcohol, in particular glycerine.

It is assumed that the surfactant forms as to say a thin film around the separate silica particles under warranting a certain mutual affinity of the balls which are provided with a film, so that said balls are in the form of a chain and thereby exercise the favourable thixotropic property.

The sealant compositions according to the invention may contain a dye in an amount of 0,1—1,1%, by weight.

A preferred sealant composition according to the invention has the following formulation, based on the weight,

| | |
|---|---|
| woodfibres | 8,5% |
| talc | 3,5% |
| glycerine | 1,2% |
| linseed oil | 53,8% |
| mineral oil | 20,7% |
| silicas | 6,2% |
| polystyrene balls | 5—6% |
| dye | 0,1—1,1%. |

It is noted that as a substance to reduce the specific weight materials may be used such as plastic materials, among others expanded polyurethan balls, expanded polystyrene balls, etc. Furthermore cork particles may be used for this purpose too.

As filter wood fibres are particularly suited.

Furthermore the invention relates to a process for the preparation of the above disclosed sealant compositions, characterized in that a vegetable or animal oil, a mineral oil, silicas and a surfactant are throughly blended under obtaining a homogeneous blend, whereupon to the obtained blend under vigorous stirring there are added a substance for reducing the specific weight, filler and optionally a dye, wherein the stirring is continued until a homogeneous sealant composition is obtained.

According to an embodiment first the linseed oil, mineral oil, glycerine and silicas are throughly mixed with each other under obtaining a homogeneous blend, whereupon to the obtained blend under vigorous stirring wood fibres, talc, polystyrene balls and dye are added under obtaining a homogeneous sealant composition.

The process according to the invention is illustrated in more detail in light of the following example.

Example

There are added to a vessel successively 53,8 kg of linseed oil, 1,2 kg of glycerine 20,7 kg of mineral oil and 6,2 kg of amorphe microscopic silicas. The mixture is stirred until a homogeneous blend is obtained in the form of a paste. To the obtained paste successively 8,5 kg of wood fibres, 3,5 kg of talc, 6 kg of polystyrene balls provided with a fire retardant coating and 1 kg of dye are added under vigorous stirring, wherein the stirring is continued until a homogeneous sealant composition is obtained.

The obtained sealant composition seems to be in particular useful for the permanent sealing of roof tiles in particular of ridge tiles and furthermore it possesses a superior adherence, resulting in the fact, that the tile do not get separated even under extreme weather conditions, such as heavy wind.

## Claims

1. Sealant compositions containing vegetable or animal oil, a mineral oil, filler and a substance for reducing the specific weight as ingredients, characterized in, that said sealant compositions contain silicas and a surfactant.

2. Sealant compositions according to claim 1, characterized in, that they contain 3—20%, by weight, of silicas and 0,5—3%, by weight, of surfactant.

3. Sealant compositions according to claim 1 or 2, characterized in, that said surfactant is glycerine.

4. Sealant compositions according to claims 1—3, characterized in, that they contain 0,1—1,1%, by weight, of dye.

5. Sealant compositions according to claims 1—3, characterized in, that they have the following formulation:

| | |
|---|---|
| woodfibres | 8,5% |
| talc | 3,5% |
| glycerine | 1,2% |
| linseed oil | 53,8% |
| mineral oil | 20,7% |
| silicas | 6,2% |
| polystyrene balls | 5—6% |
| dye | 0,1—1,1%. |

6. A process for the preparation of the sealant compositions according to claims 1—5, characterized in, that vegetable or animal oil, a mineral oil, silicas and a surfactant are throughly mixed with each other under obtaining a homogeneous blend, whereupon to the obtained blend under vigorous stirring a substance for reducing the specific weight, filler and optionally a dye are added, wherein the stirring is continued until a homogeneous sealant composition is obtained.

7. A process for the preparation of the sealant compositions according to the claim 6, characterized in, that linseed oil, mineral oil, glycerine and silicas are thoroughly mixed with each other under obtaining a homogeneous blend, whereupon to the obtained blend under vigorous stirring wood fibres, talc, polystyrene balls and dye are added under obtaining a homogeneous sealant composition.

## Patentansprüche

1. Abdichtungszusammensetzungen die pflanzliches oder tierisches Öl, Mineralöl, Füllmaterial und eine Substanz zur Reduzierung des spezifischen Gewichtes als Bestandteile ausweisen, dadurch gekennzeichnet, daß diese Abdichtungszusammensetzungen Silikate und einen grenzflächaktiven Stoff aufweisen.

2. Abdichtungszusammensetzungen nach Anspruch 1, dadurch gekennzeichnet, daß sie 3—20 Gewichtsprozent an Silikaten und 0,5—3 Gewichtsprozent an Tensid enthalten.

3. Abdichtungszusammensetzungen nach einem der Ansprüche 1 oder 2, dadurch gekennzeichnet, daß das Tensid Glyzerin ist.

4. Abdichtungszusammensetzungen nach einem der Ansprüche 1 bis 3, dadurch gekennzeichnet, daß sie 0,1—1,1 Gewichtsprozent an Farbstoff enthalten.

5. Abdichtungszusammensetzungen nach einem der Ansprüche 1 bis 3, dadurch gekennzeichnet, daß sie sich folgendermaßen zusammensetzen:

| | |
|---|---|
| Holzfasern | 8,5% |
| Talk | 3,5% |
| Glyzerin | 1,2% |
| Leinöl | 53,8% |
| Mineralöl | 20,7% |
| Silikate | 6,2% |
| Polystyrol-Rundkörper | 5—6% |
| Farbstoff | 0,1—1,1%. |

6. Verfahren zur Herstellung der Abdichtungszusammensetzungen nach einem der Ansprüche 1 bis 5, dadurch gekennzeichnet, daß pflanzliches oder tierisches Öl, ein Mineralöl, Silikate und ein Tensid unter Erhaltung einer homogenen Mischung gründlich miteinander gemischt werden, daß zu der erhaltenen Mischung unter kräftigem Rühren eine Substanz zur Reduzierung des spezifischen Gewichts, Füllmaterial und wahlweise ein Farbstoff hinzugegeben werden, wobei das Rühren solange fortgeführt wird, bis eine homogene Abdichtungszusammensetzung erhalten wird.

7. Ein Verfahren zur Herstellung der Abdichtungszusammensetzungen nach Anspruch 6, dadurch gekennzeichnet, daß Leinöl, Mineralöl, Glyzerin und Silikate gründlich zur Erreichung einer homogenen Mischung miteinander gemischt werden, und daß zu der erhaltenen Mischung unter kräftigem Rühren Holzfasern, Talk, Polystyrol-Rundkörper und Farbstoff hinzugegeben werden, um eine homogene Abdichtungszusammensetzung zu erhalten.

## Revendications

1. Compositions d'étanchéité contenant comme ingrédients une huile végétale ou animale, une huile minérale, une charge et une substance pour diminuer le poids spécifique, caractérisées en ce que lesdites compositions d'étanchéité contiennent des silices et un surfactif.

2. Compositions d'étanchéité selon la revendication 1, caractérisées en ce qu'elles contiennent 3—20% en poids de silices et 0,5—3% en poids de surfactifs.

3. Compositions d'étanchéité selon la revendication 1 ou 2, caractérisées en ce que ledit surfactif est la glycérine.

4. Compositions d'étanchéité selon les revendications 1 à 3, caractérisées en ce qu'elles contiennent 0,1—1,1% en poids de colorant.

5. Compositions d'étanchéité selon les revendications 1 à 3, caractérisées en ce qu'elles ont la

formulation suivante:

| | |
|---|---|
| Fibres de bois | 8,5% |
| Talc | 3,5% |
| Glycérine | 1,2% |
| Huile de lin | 53,8% |
| Huile minérale | 20,7% |
| Silices | 6,2% |
| Billes de polystyrène | 5—6% |
| Colorant | 0,1—1,1% |

6. Procédé de préparation des compositions d'étanchéité selon les revendications 1 à 5, caractérisé en ce qu'on mélange intimement l'huile végétale ou animale, une huile minérale, les silices et un surfactif ensemble jusqu'à l'obtention d'un mélange homogène, ensuite on ajoute au mélange obtenu, sous forte agitation, une substance pour diminuer le poids spécifique, la charge et éventuellement un colorant, l'agitation étant continuée jusqu'à l'obtention d'une composition d'étanchéité homogène.

7. Procédé de préparation de compositions d'étanchéité selon la revendication 6, caractérisé en ce qu'on mélange intimement de l'huile de lin, l'huile minérale, la glycérine et les silices ensemble jusqu'à l'obtention d'un mélange homogène, ensuite on ajoute au mélange obtenu, sous forte agitation, des fibres de bois, du talc, des billes de polystyrène et du colorant jusqu'à l'obtention d'une composition d'étanchéité homogène.